Europäisches Patentamt

European Patent Office

Office européen des brevets

(19)

(11) **EP 1 336 892 A1**

(12) **EUROPEAN PATENT APPLICATION**

(43) Date of publication:
   **20.08.2003 Bulletin 2003/34**

(51) Int Cl.⁷: **G02F 1/125**, G02F 1/11,
   G02F 1/21

(21) Application number: **02003599.4**

(22) Date of filing: **15.02.2002**

(84) Designated Contracting States:
   **AT BE CH CY DE DK ES FI FR GB GR IE IT LI LU
   MC NL PT SE TR**
   Designated Extension States:
   **AL LT LV MK RO SI**

(71) Applicant: **Paul Drude-Institut für
   Festkörperelektronik im Forschungsverbund
   Berlin e.V.
   10117 Berlin (DE)**

(72) Inventors:
   • **Santos, Paulo, V., Dr.
     Hausvogteiplatz 5-7, 10117 Berlin (DE)**
   • **Krishnamurthy, Srini, Dr.
     California 94025 (US)**

(74) Representative:
   **Manitz, Finsterwald & Partner GbR
   Postfach 31 02 20
   80102 München (DE)**

(54) **A controllable optical device**

(57)    An controllable optical device for integrated optics applications comprises a material structure, at least one optical cavity defined in said material structure and having a refractive index, a dimension, and first and second sides, said material structure including a plurality of alternating transparent layer regions of alternating refractive indices forming first and second Bragg mirrors disposed one at each of said first and second sides of said optical cavity, and at least one transducer provided on said material structure for the generation of acoustic waves adapted to modulate said refractive index and said dimension of said optical cavity whereby to influence a light beam incident on said Bragg mirrors and said optical cavity. The device can be designed to have acoustic and optic waves propagating in arbitrary directions.

# Fig. 2

EP 1 336 892 A1

**Description**

FIELD OF THE INVENTION

The invention relates to a controllable optical device for integrated optics applications including optical computing and telecommunication. A compact, fast, and dynamically tunable optical switch is described.

BACKGROUND OF THE INVENTION

The manipulation of optical information may be achieved by turning on and off a light beam or by changing its propagation direction in a sub-millisecond time scale. Different approaches have been envisaged to realize such devices:

The most direct switch realization consists of a mirror which can be included in or removed out of the light propagation path. Alternatively, a mirror with an adjustable angle of incidence relative to the light beam can be used. For integrated optics, this technique requires a technology capable of making movable parts on the substrate.

A second approach for light switching involves an absorptive element whose absorption coefficient can be changed by an external signal. Examples of this kind of switch are semiconductor structures based on the Optical Stark effect, which can be controlled by an external electric or acoustic signal (F. C. Jain and K. K. Bhattacharjee, SPIE Proc. 1347, 614 (1990)). These switches are fast and compact. Their operation, however, is limited to a small wavelength region which is dictated by the absorption properties of the medium.

A third approach for the realization of switches is based on light interference. The interference may be produced in interferometric arrangements, such as the Max-Zehnder interferometer, in which an external signal is employed to control the phase retardation between two beams generated from the original light beam. The phase variation may be controlled by an electric signal (using the electro-optical effect) or by an optical signal (using non-linear optical effects).

A special form of interferometry is realized using dynamic Bragg gratings which can be produced by the periodic modulation of the optical properties by an electric or by an acoustic signal. In the latter case, an acoustic wave or a surface acoustic wave (SAW) is used to modulate the acoustic properties (A. A. Maradudin, in Modern Problems in Surface Physics: Proc. of 1st International School on Condensed Matter Physics, Publishing House of the Bulgarian Academy of Science, Sofia, 1981, p. 11; B. A. Auld, Acoustic Fields and Waves in Solids, Robert E. Krieger Publishing Company, Inc., Malabar, Florida, 1990; A. A. Oliner, Acoustic Surface Waves, Springer, Berlin, 1994). The gratings constructively reflect a specific light wavelength, which is defined by the wavelength of the acoustic wave so that the device becomes a tunable switch.

Different approaches for the realization of light switches and tunable light filters based on the interaction between an optical wave and an acoustic wave have been proposed (A. Korpel, Acousto-Optics (Marcel Dekker, Inc., New York, 1997); C. S. Tsai, Guided-Wave Acousto-Optics, Springer, Berlin, 1990; C. S. Tsai, B. Sun, and A. Kar-Roy, Appl. Phys. Lett. 70, 3185 (1997); J. E. Graebner; US Pat. No 6,052,497).

Since the electro-optical and acousto-optical interactions are relatively weak these approaches require a long propagation path for the light beam. Hence, optical devices of this kind have to be of large size in order to effectively influence the light beam.

Materials with spatially modulated optical properties, such as photonic band gap crystals, also denoted as photonic lattices, are presently receiving substantial attention due to their ability of molding the light flow within dimensions of the order of the light wavelength (E. Yablonovitch, Phys. Rev. Lett. 58, 2059 (1987); S. John, Phys. Rev. Lett. 58, 2486 (1987); J. D. Joannopoulos, R. D. Meade, J. N. Winn, Photonic Crystals: Molding the Flow of Light, Princeton University Press, Princeton, 1995). A further advantage of these materials relies on the fact that their optical properties can be tailored by controlling the structural dimensions and/or the composition of the modulation profile. As a result, they have been envisaged as basic media for ultra small optical cavities as well as for integrated optical circuits.

Most of the proposed applications of photonic lattices have focused on passive optical elements like Bragg mirrors, light cavities, and waveguides. Controllable devices based on photonic lattices require the control of the structural dimension or of the material's optical properties by an external signal. The modulation of the photonic lattice opens new fields of application for photonic lattices since it allows for dynamic control of the light flow. In a recent report, Busch and John have proposed tunable photonic crystals consisting of liquid crystals encapsulated in a photonic lattice (K. Busch and S. John; Phys. Rev. Lett. 83, 967 (1999)). The tunability is achieved by modifying the optical properties of the liquid crystal through the application of an external electric field or by changing the temperature (K. Yoshino, Y. Shimoda, Y. Kawagishi, K. Nakayama, and M. Ozaki, Appl. Phys. Lett. 75, 932 (1999); S. W. Leonard, J. P. Mondia, H. M. van Driel, O. Toader, S. John, K. Busch, A. Birner and U. Gösele, V. Lehmann, Phys. Rev. B 61, 2389 (2000)).

A convenient approach to modulate a photonic crystal consists in the use of an acoustic wave. This concept has been experimentally proved in long, one-dimensional fiber Bragg gratings (W. L. Liu, P. S. J. Russell, and L. Dong, Optics Letts. 22, 1515 (1997); W. L. Liu, P. S. J. Russell, D. O. Culverhouse and R. Reekie, in Conference on Lasers and Electro-Optics, Vol. 9 of 1996 OSA Technical Digest Series, Optical Society of America, Washington DC., 1996, p. 243).

DISCLOSURE OF THE INVENTION

It is an object of the present invention to provide a design for a controllable optical device which is compact, fast, and which can be fabricated by employing processes compatible with those employed for light emitting and light detecting components.

The controllable optical device according to the present invention comprises a material structure, at least one optical cavity defined in said material structure and having a refractive index, a dimension, and first and second sides, said material structure including a plurality of alternating transparent layer regions of alternating refractive indices forming first and second Bragg mirrors disposed one at each of said first and second sides of said optical cavity, and at least one transducer provided on said material structure for the generation of acoustic waves adapted to modulate said refractive index and said dimension of said optical cavity whereby to influence a light beam incident on said Bragg mirrors and said optical cavity.

The controllable optical device according to the present invention is based on the modulation of the optical cavity by an acoustic wave. The optical cavity serves to concentrate the light beam, whereby the effective photon transit time across the cavity region is increased. Because of the strong concentration of the light field in the cavity (or, equivalently, due to the longer transit time), the acousto- and electro-optical interaction with an acoustic wave is enhanced in this region. Thus, only reduced interaction lengths are required and the device size can be reduced, i.e. a compact device is achieved.

The use of acoustic waves to influence the light beam constitutes a fast way of providing a switching action. A device having an optical cavity modulated by acoustic waves therefore provides a fast optical switch and/or a dynamically tunable filter. In addition, its fabrication is compatible with existing planar semiconductor processing technology. As a result, it can be incorporated on the same semiconductor substrate on which laser diodes and detectors are fabricated.

According to a preferred embodiment of the controllable optical device of the invention, the direction of propagation of said optical wave extends perpendicular to said Bragg mirrors and said optical cavity. Such a device may serve particularly well as an optical switch in integrated optical circuits.

Alternatively, the direction of propagation of said optical wave may extend oblique to said Bragg mirrors and said optical cavity. Such a device can be used as a tunable switch of the intensity of reflected or transmitted light and also of the direction of propagation of the light beam.

According to a another particular embodiment of the controllable optical device, said Bragg mirrors and said optical cavity may extend parallel to a surface of said material structure. In this embodiment, the device may function as a wavelength tunable mirror or a wavelength tunable transmission filter for light impinging on the surface of the material structure. This controllable optical device may also function as switch of the propagation direction of the light beam controlled by the acoustic wave.

According to a particularly advantageous embodiment of the invention, said optical cavity and said Bragg mirrors of said controllable optical device are implemented as 2D photonic band gap lattices by including etched holes or trenches in said optical cavity and said Bragg mirrors. In this case, the acoustic wave modulates not only the refractive index but also the dimensions of the 2D photonic band gap lattice. This effect leads to a considerably larger modulation of the optical properties than the traditional compression/dilatation of the material induced by acoustic waves and, hence, to an increased efficiency of the interaction between an optical wave and an acoustic wave in said optical cavity. Thus, the size of the device can be further reduced.

Preferably, said material structure of the controllable optical device of the invention is itself piezoelectric or a piezoelectric layer or piezoelectric layers are deposited on it and used to generate acoustic oscillations which propagate through the material structure. Because of said piezoelectricity the acoustic wave may additionally influence the light beam due to the electro-optical effect. This kind of electro-optical modulation may also be applied to the optical cavity. Hence, the efficiency of the interaction between the acoustic wave and the light beam is further increased.

The invention also relates to a method of switching a light beam, comprising the steps of directing a light beam into an optical cavity sandwiched between first and second multilayer structures each forming a respective Bragg mirror and directing an acoustic wave at said Bragg mirrors and said optical cavity to influence said light beam, for example, to realize a switching function.

Both the aforementioned optical switch and the above recited method of switching a light beam lead to the same advantageous results that have been discussed above.

BRIEF DISCRIPTION OF THE INVENTION

Fig. 1        is a schematic explanatory view of a first ("collinear cavity") embodiment of a controllable optical device of the invention.

Fig. 2        is a schematic top view of an idealized device structure according to the embodiment of Fig. 1 which is used for modeling purposes.

Fig. 3        shows the optical reflection and transmission coefficient in the structure of Fig. 2.

Fig. 4        shows depth (in -z direction) profiles of strain components $s_1$ and $s_3$ induced by a surface acoustic wave of the Rayleigh type in the structure of Fig. 2. $s_1$ and $s_3$ are defined in terms of the acoustic displacement vector u=(ux,uy,uz) as $s_1=du_x/dx$ and $s_3=du_z/dz$, respectively (the x, y and z axes are defined in Fig. 2).

Fig. 5        shows depth profiles of relative refractive index modulation for (a) TE and (b) TM polarizations in the structure of Fig. 2.

Fig. 6        is a schematic explanatory view of a second ("non-collinear cavity") embodiment of a controllable optical device of the invention.

Fig. 7        shows the angular dependence of the transmission (a) and reflection (b) of the structure in Fig. 6.

Fig. 8        shows the operation of the structure in Fig. 6 as an optical switch (a) in the absence of a surface acoustic wave and (b) in the presence of a surface acoustic wave.

Figs. 9 (a) - (f)      show cross-sectional views of modified embodiments of the structure shown in Fig. 1.

Fig. 10 (a) - (c)      show cross-sectional views of modified embodiments of the structure shown in Fig. 6.

DESCRIPTION OF THE PREFERRED EMBODIMENTS

The preferred embodiments of the present invention will be described in detail with reference to the accompanying drawings. Although other materials can be used, reference is made only to structures based on III-V semiconductors, which are nowadays conventional materials for electro-optical components.

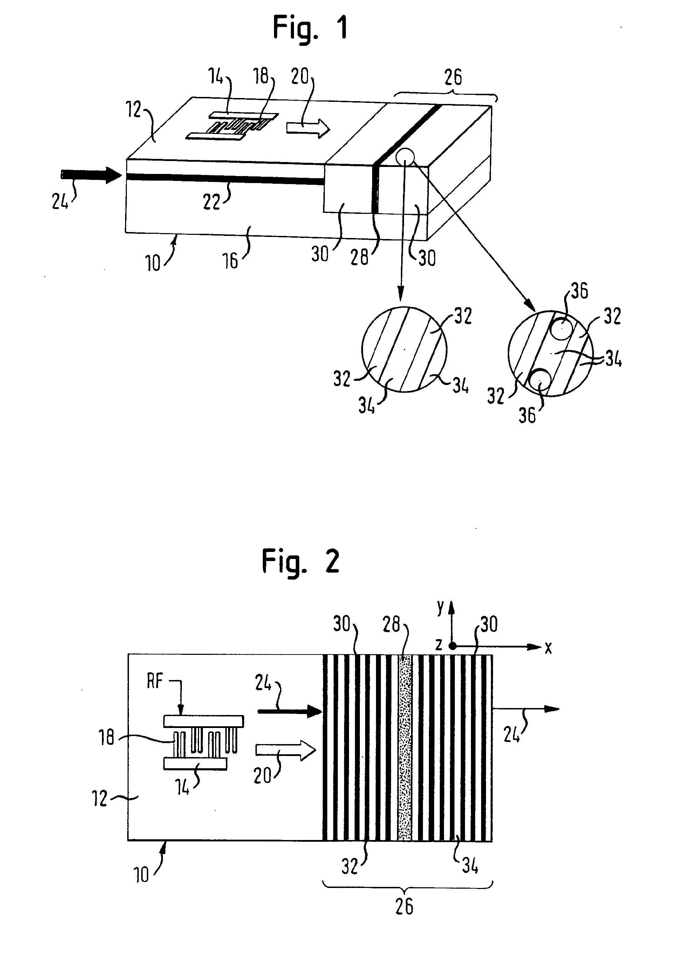

Fig. 1 shows a first embodiment of a controllable optical device of the present invention. It comprises a semiconductor substrate 10 having a first surface 12. The substrate 10 is itself piezoelectric (meaning that an electric voltage is capable of inducing a stress field) and can, for example, consist of $LiNbO_3$, ZnO, or GaAs. Alternatively, a piezoelectric layer or piezoelectric layers are disposed on a non-piezoelectric substrate and used to generate acoustic oscillations which propagate through the substrate. In both cases acoustic waves can be generated through the piezoelectric effect.

An acoustic transducer 14 is arranged on the first surface 12 of the substrate 10, although it may also be arranged on a second surface 16 of the substrate 10 opposite to said first surface 12. If the substrate 10 is several hundreds of micrometers thick, the transducer 14 may even be placed on one of the sides perpendicular to the first and second surfaces 12, 16 of the substrate 10.

In the embodiment shown in Fig. 1, the acoustic transducer is an interdigital transducer 14 consisting of interlaced metal finger elements 18 deposited on the first surface 12 of the substrate 10 for the generation of surface acoustic waves (SAWs) 20. The acoustic wavelength is determined by the periodicity of the finger structure 18. The application of an RF-voltage to the interdigital transducer 14 produces SAWs 20 propagating along the first surface 12 of the substrate 10, which have wavelengths typically in the range from 0.5 $\mu$m to 10 $\mu$m.

Although the following discussion will be concentrated on the use of SAWs of the Rayleigh type propagating along the surface of the substrate, the modulation principles also apply for other types of acoustic waves, e.g. bulk acoustic waves.

The acoustic transducer 14 may be capable of concentrating acoustic waves. Also, an acoustic waveguide (not shown) for guiding the acoustic waves may be provided on the surface 12 of the substrate 10. Focusing of the acoustic beam may be achieved by employing focusing acoustic transducers (S. R. Fang, S. Y. Zhang, Z. F. Lu, IEEE Trans. SU-36, 178 (1989)) and/or by shaping the acoustic waveguide to form a tapered horn (I. Yao, 1980 Ultrasonic Symposium 37 (1980)). This can also be used to assure an efficient coupling between the wave leaving the transducer and the acoustic wave guide.

The acoustic wave guide may consist of a ridge waveguide with lateral dimensions typically between 2 $\mu$m and 10 $\mu$m, and a height of a few micrometers (S. Markman, R. C. M. Li, A. A. Oliner, H. L. Bertom, IEEE Trans. SU-24, 79 (1977) and S. Y. Chou, P. R. Krauss, P. J. Renstrom, Appl. Phys. Lett. 67, 3114 (1995)). The acoustic wave guide may also coincide with an optical wave guide.

In the embodiment of Fig. 1, an optical waveguide is used to direct the incident light to the active part of the optical device. The wave guide is formed in the substrate 10 by a layer 22 extending parallel to the first surface 12 of the substrate 10 at a depth of about 1 $\mu$m underneath said first surface 12. The optical waveguide layer 22 is capable of guiding optical waves 24 with wavelengths typically ranging from about 0.25 $\mu$m to 2 $\mu$m. To this end, the core material of the wave guide layer 22 has a refractive index higher than that of the surrounding substrate material in order to confine the optical wave 24 close to its core region. Alternatively, the optical waveguide layer 22 may also be arranged on the surface 12 of the substrate 10.

An active region 26, allowing for an interaction between the optical waves 24 and acoustic waves 20, is defined in the substrate 10 and structured in a direction perpendicular to the propagation of the optical wave 24. The active region 26 comprises an optical cavity 28 consisting of a GaAs layer which is sandwiched between first and second Bragg mirrors 30. The Bragg mirrors 30 are formed from multilayer structures of material layers having different refractive indices and thicknesses, e.g. by stacks of alternating GaAs and AlAs layers 32, 34. The thicknesses and refractive indices of the layers 32, 34 are chosen so as to induce constructive interference of the optical wave 24.

As illustrated in the insets of Fig. 1, the active region 26 may be structured in the direction of propagation of the optical wave 24, and may be a one-dimensionally layered structure of alternating layers 32, 34.

Alternatively, in order to increase the efficiency of interaction between the optical wave 24 and the acoustic wave 20, the active region 26 can be a two-dimensionally structured area, termed a "photonic crystal" or "photonic lattice", which provides an additional structure in a direction perpendicular to the direction of propagation of the optical wave 24. A suitable photonic structure may be created by trenches or holes 36 etched into the optical cavity 28 and into Bragg mirrors 30. The dimensions of the photonic structures, i.e. the dimensions of the trenches or holes 36 and their spacing, are comparable to the wavelength of the optical waves 24, which is of the order of a few hundred nm.

The optical switching action is based on the periodic modulation of the refractive index and of the thicknesses of the optical cavity 28 and Bragg mirror layers 32, 34 by the acoustic waves 20. For operation as a switch, the active region 26 is structured so as to form an optical resonator consisting of the optical cavity layer 28 surrounded by the Bragg mirrors 30 consisting of layers 32, 34. The resonance wavelength of the optical cavity 28 is determined by its thickness and refractive index, as well as by those of the Bragg mirror layers 32, 34. When quarter-wavelength Bragg mirror layers 32, 34 are used, the resonance wavelength $\lambda_0$ of the cavity 28 is related to the cavity's thickness d and effective refractive index $n_{eff}$ by the following approximate expression:

$$\lambda_0 = 2n_{eff}d. \tag{1}$$

At its resonant wavelength $\lambda_0$, the resonator exhibits a low light reflection and a high light transmission coefficient.

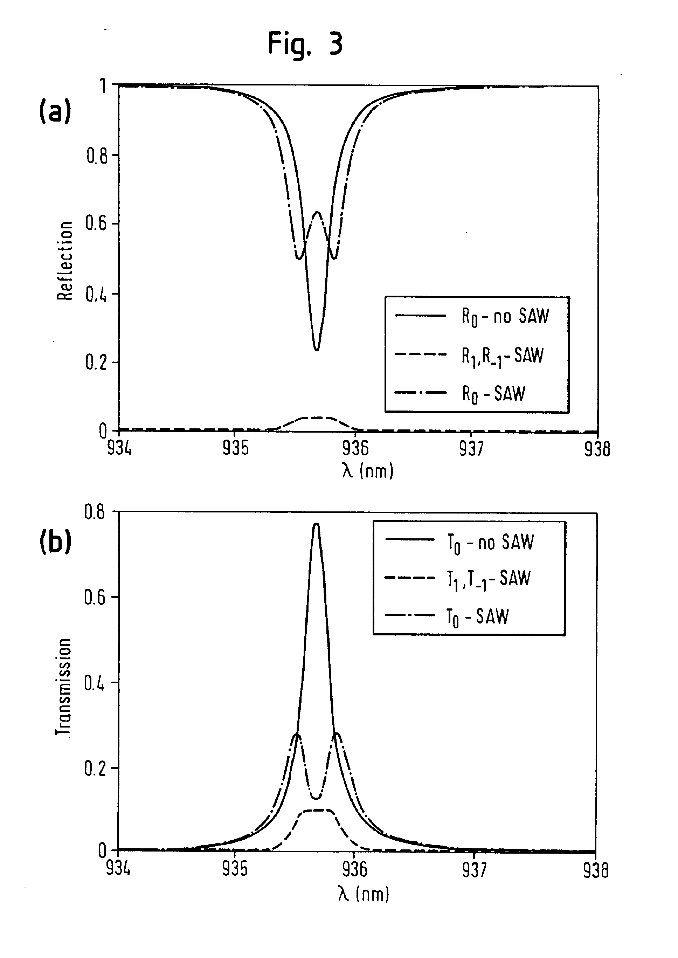

For modeling purposes, a model device as illustrated in Fig. 2 is considered which corresponds to the embodiment shown in Fig. 1. In this particular case, the resonator cavity 28 consists of a 142.4 nm-thick GaAs layer surrounded by Bragg mirrors 30. Each Bragg mirror 30 consists of 20 alternating layer-pairs of GaAs (65.5 nm) and AlAs (76.9 nm). The calculated transmission and reflection coefficients for this cavity are illustrated in Figs. 3(a) and 3(b), respectively. A surface acoustic wave 20 with a wavelength of 5.6 $\mu$m and an acoustic linear power density of 160 W/m is assumed. The acoustic power density is defined as the ratio between the power and the width of the surface acoustic wave beam.

The optical wave 24 is assumed to transverse the active region 26 at a distance of 1 $\mu$m below the surface 12 (cf. Fig. 1). Without the excitation by a surface acoustic wave, the cavity 28 has a resonance wavelength $\lambda_0 = 935.7$ nm, as illustrated by the dip in the reflection coefficient ($R_0$(no SAW)) and by the maximum in the transmission coefficient ($T_0$-(no SAW)) in Figs. 3(a) and 3(b), respectively. The reflection (transmission) coefficient is defined as the ratio of reflected intensity to the incident intensity. The lines marked by symbols display the optical reflection and transmission under excitation by a surface acoustic wave. Since the structure is modulated at the angular frequency $\omega_{SAW}$ of the surface acoustic wave, the reflected (and transmitted) light has a component at the same frequency $\omega_L$ as the input light (denoted as $R_0$ ($T_0$)) and two additional ones of equal intensity at $\omega_L + \omega_{SAW}$ and $\omega_L - \omega_{SAW}$ ($R_{+1}$ ($T_{+1}$) and $R_{-1}$ ($T_{-1}$)). Since $\omega_{SAW} \ll \omega_L$, the transmission contrast ratio $C_T$ of the switch becomes a ratio of the sum of the transmission coefficient through the central $\omega_L$ and shifted $\omega_L \pm \omega_{SAW}$ channels to that through the $\omega_L$ channel in the absence of a surface acoustic wave:

$$C_T = \frac{T_0 + T_1 + T_{-1}}{T_0(no\ SAW)} \qquad (2)$$

The transmission through shifted frequencies increases with the power of the acoustic wave.

The frequency shift also allows for the heterodyne detection of the reflected (or transmitted) light. Under reflection, the component of the detected light at the frequency $\omega_{SAW}$ of the surface acoustic wave has an intensity proportional to $(\sqrt{R_{\pm 1}R_0}$ $(\sqrt{T_{\pm 1}T_0}$ for transmission). For heterodyne detection as well as for detection at the displaced frequencies $\omega \pm \omega_{SAW}$ the switch yields an infinite contrast ratio.

The acoustic modulation in the optical cavity 28 offers several advantageous features. First, the strong concentration of the light field in the cavity 28 leads to a large enhancement of its interaction with an acoustic wave in this region and, thus, to very short interaction lengths. The total thickness of the layer stack, i.e. the active region 26, in Fig. 2 is of only 5.8 $\mu$m.

Second, the acoustic wave modulates not only the refractive index, but also the dimensions of the photonic crystals. This effect can lead to a considerably larger modulation of the optical properties than the traditional compression/dilatation of the material induced by acoustic waves.

In order to illustrate this point, it is noted that the phase shift $\Delta\Phi$ of an optical beam in a layer where the refractive index n and the thickness d are modulated by an acoustic wave is given by

$$\Delta\Phi = \frac{2\pi n d}{\lambda_L}\left[\frac{\Delta n}{n} + s_1\right] \qquad (3)$$

where $s_i = \Delta d/d$ is the strain induced by the acoustic wave along the light propagation direction and $\Delta n/n$ is the change caused by the compression/rarefaction of the lattice by acoustic waves. The previous expression is valid for thicknesses d smaller than the acoustic wavelength. The effective modulation of the refractive index can thus be expressed as

$$\frac{\Delta n_{eff}}{n} = \frac{\Delta n}{n} + \frac{\Delta d}{d} \ . \qquad (4)$$

Equation 4 shows that the modulation of the dimensions of the structured material leads to an additional contribution to the refractive index modulation. Under appropriate conditions, this mechanism can be the dominant one.

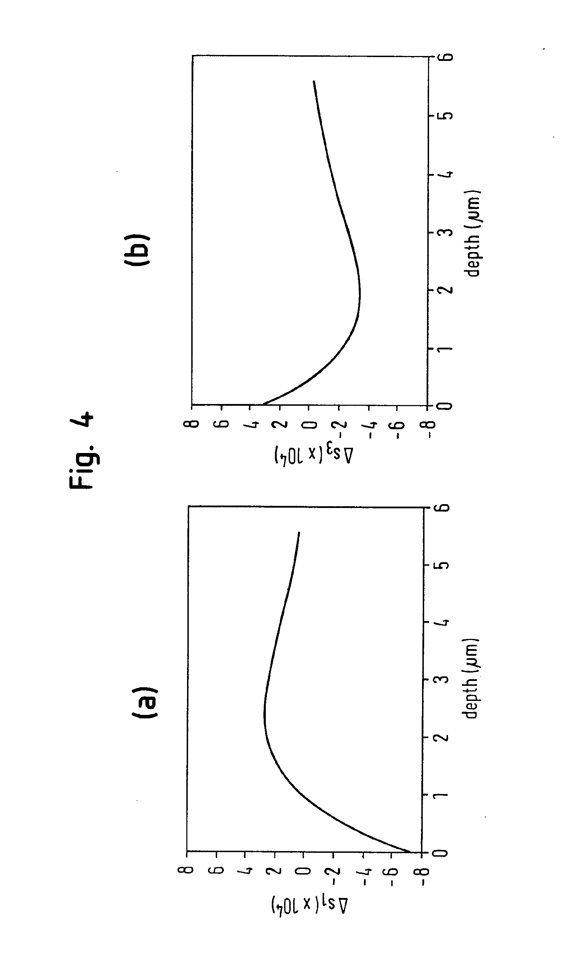

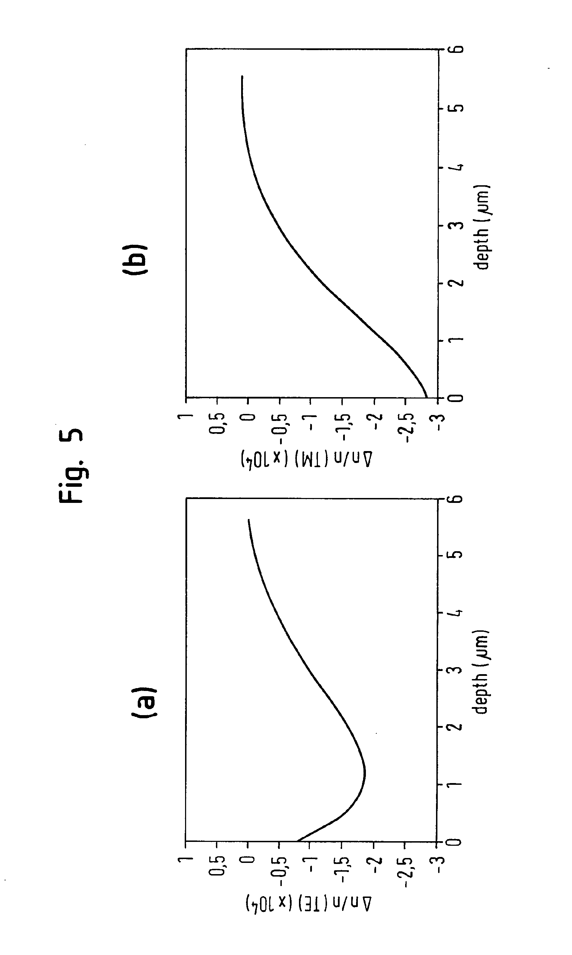

Fig. 4 illustrates the depth profiles of the strain component $s_1$ and Fig. 5 shows the depth profiles of the relative refractive index modulation for (a) TE and (b) TM polarizations by a surface acoustic wave in the structure of Fig. 2. The depth is measured as the distance from the surface 12 towards the surface 16. As defined in Fig. 2, it is in the z direction. The calculations were performed for a surface acoustic wave with a wavelength of 5.6 $\mu$m and with a linear power density $P_1$ = 160 W/m propagating on a GaAs/AlAs multilayer structure with a layer thickness equal to those of the Bragg mirrors of the structure in Fig. 2. It is noted that the $s_1$ component is very high near the surface and has the same sign as the other term, leading to an enhancement of acoustic-optic coupling. The modulation for TM polarized modes is slightly larger than that for TE modes.

Finally, the acoustic wave may also change the optical properties through the electro-optical effect associated with the piezoelectric field. This kind of electro-optical modulation can also be applied to the cavity structures.

The cavity structure illustrated in Figs. 1 and 2 can be termed a collinear or "in-plane cavity" structure, since the acoustic and optical waves propagate in the same direction. The wavelength selectivity of these structures is determined only by the cavity dimensions.

The fabrication of an in-plane cavity device requires a special process capable of producing a laterally structured medium. Two processes that can achieve this goal are described below:

1. In the case of a hybrid structure in which the acoustic wave is generated in a second material and then coupled to the material structure, the deposition of a multilayer structure is performed using a conventional deposition process. An acoustic wave propagating along the growth axis may be generated by transducers placed on top of the multilayer or on the back side of the substrate supporting the material structure. Surface acoustic waves can also be employed in this configuration.

2. In case of a monolithic structure, e.g. when (Al,Ga)As multilayers are deposited on a GaAs substrate, care has to be taken that the growth direction is a piezoelectric one. This is not the case for the conventional [100] growth direction of (Al,Ga)As structures. Possibilities include the growth on [110], [311], or [111] substrates. If the substrate is several hundreds of micrometers thick, an acoustic transducer may be placed on the side of the substrate, so as to irradiate the surface acoustic wave in the direction perpendicular to the layers. Recent developments of the imprint technique may make such placement of interdigital transducers possible (S. Y. Chou, P. R. Krauss, P. J. Renstrom, Appl. Phys. Lett. 67, 3314 (1995)).

3. In the case of 2D photonic structures, trenches or holes 36 are etched into the optical and acoustic wave guides in order to form a photonic crystal (illustrated in the inset of Fig. 1). The dimension of the photonic structures has to be comparable to the wavelength of the light to be influenced, which is of the order of a few hundred nm. Due to the small dimensions, a preferred method for the fabrication is the use of electron-beam lithography and subsequent reactive ion etching. An ion etching process may be necessary in order to produce deep holes with uniform dimensions.

For efficient operation, an in-plane cavity device with photonic structures is preferably used with an optical waveguide for the confinement of the optical field. Conventional techniques are available for the fabrication of optical waveguides. A preferred design involves the deposition of layers with different refractive indices on the surface of the substrate. However, the optical and acoustic properties of the layers will be modified by the holes, since the structuring leads to a reduction of the refractive index of the layer material. Hence, care must be taken to reduce the reflection of the waves at the border of the structured region and to guarantee that the confinement of optical and acoustic waves is not affected by the fabrication process.,

In the case of photonic structures made of air holes, the refractive index depends on the size and density of the holes. An antireflecting effect can therefore be achieved by introducing a region in which the size or the density of holes increases gradually to the values of the structured region. (The same approach can be used to reduce acoustic reflections.) Accordingly, the surrounding layers of the core of light wave guide need to be structured in order to assure light confinement in the optical waveguide. As a result, holes with a high ratio between the depth and the diameter are required.

Since the wavelength of the acoustic wave normally is much larger than that of the optical wave and larger than the dimension of the holes, the structuring is not expected to significantly influence the propagation of acoustic waves. In fact, since the structuring normally tends to reduce the effective sound velocity, it can be beneficial to confine the optical wave near the active region.

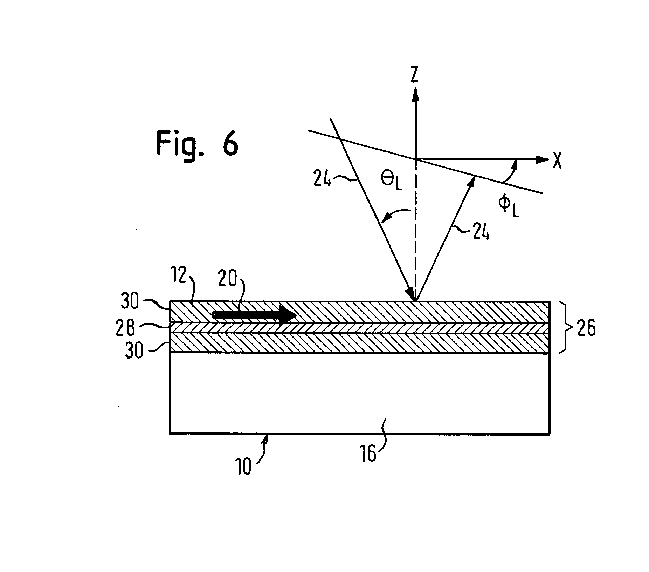

Fig. 6 shows a second embodiment of a controllable optical device of the present invention having a "non-collinear cavity" structure in which the direction of propagation of the acoustic wave 20 extends parallel to the Bragg mirrors and to the optical cavity. Such a device may be used as a tunable light transmission or reflection filter, or as a switch for the propagation direction of the light wave. Due to the special geometry, this structure is more appropriate for active mirrors or active transmission elements for light impinging on the material structure. It can also be used to switch the propagation direction of the optical wave.

Corresponding features of the second embodiment will be denoted by the same reference numerals as in Fig. 1.

Again the device comprises a substrate 10 having a first surface 12, which may itself be a piezoelectric material (meaning that an electric voltage is capable of inducing a stress field), such as $LiNbO_3$, ZnO, or GaAs, or a piezoelectric layer or piezoelectric layers are disposed on it and used to generate acoustic oscillations which propagate through the substrate 10. Alternatively, the structure may consist of a single structure (such as Si or GaAs) or a multilayer structure (such as an (Al,Ga)As multilayer structure) bonded to a piezoelectric substrate. Techniques like direct bonding or wafer bonding may be used to combine the materials.

The acoustic wave 20 may be a bulk acoustic wave or a surface acoustic wave. A surface acoustic wave 20 can be generated by an interdigital transducer (not shown) consisting of interlaced Al fingers deposited on a surface of the device and propagates in a direction predominantly parallel to the first surface 12 of the substrate 10. The acoustic wavelength is determined by the periodicity of the finger structure. The application of an RF-voltage to the interdigital transducer leads to the launching of the acoustic wave 20. In order to have a wide tunability range required in operation as a tunable switch, it becomes necessary to have an interdigital transducer with a wide resonance range. Interdigital transducer designs employing graded finger periods may be used to achieve the required bandwidth.

An active region 26 allowing for an interaction between an optical wave 24 and the acoustic wave 20 is defined in the substrate 10 and structured in the direction perpendicular to the first surface 12 of the substrate 10. The active region 26 comprises an optical cavity 28, e.g. consisting of a GaAs layer, which is sandwiched between first and second Bragg mirrors 30, with the optical cavity 28 as well as the Bragg mirrors 30 extending predominantly in a direction parallel to the first surface 12 of the substrate 10. The Bragg mirrors 30 may be formed from stacks of material layers having different refractive indices and thicknesses, e.g. by stacks of alternating layers of GaAs and AlAs.

In order to have a device with small dimensions and providing an effective interaction between optical and acoustic waves 24, 22 at the same time, the power density of the acoustic wave 20 has to be increased in the active region 26. This requires the focusing of both beams in these areas. Focusing of the acoustic beam may be achieved by employing focusing acoustic transducers (S. R. Fang, S. Y. Zhang, Z. F. Lu, IEEE Trans. SU-36, 178 (1989)) and/ or by shaping the acoustic waveguide to form a tapered horn (I. Yao, 1980 Ultrasonic Symposium 37 (1980)). The latter can also be used to assure an efficient coupling between the wave leaving the transducer and the acoustic wave guide. The acoustic waveguide may consist of a ridge waveguide with lateral dimensions typically between 2 $\mu$m and 10 $\mu$m, and a height of a few micrometers (S. Markman, R. C. M. Li, A. A. Oliner, H. L. Bertom, IEEE Trans. SU SU-24, 79 (1977). 20 R. P. J. Chou S. Y., Krauss P. R., Appl. Phys. Lett. 3114 (1995)).

The active region 26 containing the optical cavity 28 surrounded by the Bragg mirrors 30 may be deposited directly on the substrate 10 using a conventional deposition process for growing multilayer structures. The design of the cavity 28 and of the Bragg mirror 30 has to take into account the depth distribution of the acoustic wave field, in order to maximize the interaction with the optical field.

If the width of the optical beam is smaller than the acoustic wavelength, the "non-collinear" cavity operates with switching characteristics similar to the optical device of the first embodiment. Otherwise, it becomes a light switch which depends on the wavelength of the incoming light. In order to achieve wavelength tunability, the structure has to be mounted in a gonyometer to allow the control of the angle of incidence of the incoming light (angles $\theta_L$ and $\Phi_L$).

The design assumes that the incident light illuminates a region with dimensions along the acoustic wave propagation path much larger than the wavelength of the acoustic wave. In Fig. 6 the acoustic wave 20 propagates along an x direction. The vector normal to the substrate surface 12 defines a z direction. (The x,y,z directions are as defined in Fig. 2) The propagation direction of the incident light beam 24 which has a wave vector of magnitude $k_L = 2\pi/\lambda_L$ is described by the incidence angle $\theta_L$ and by the azymuthal angle $\Phi_L$. Since the component of the light wave vector parallel to the layers must be conserved during the scattering process, a maximum scattering amplitude is obtained when

$$k_{SAW} = 2k_L \sin(\theta_L) \cos(\Phi_L). \tag{5}$$

A resonant condition can be achieved by controlling the angle of incidence $\theta_L$. The frequency selection is obtained both by controlling the azimuthal angle $\Phi_L$ and the wavelength of the SAW used to modulate the Bragg and cavity layers.

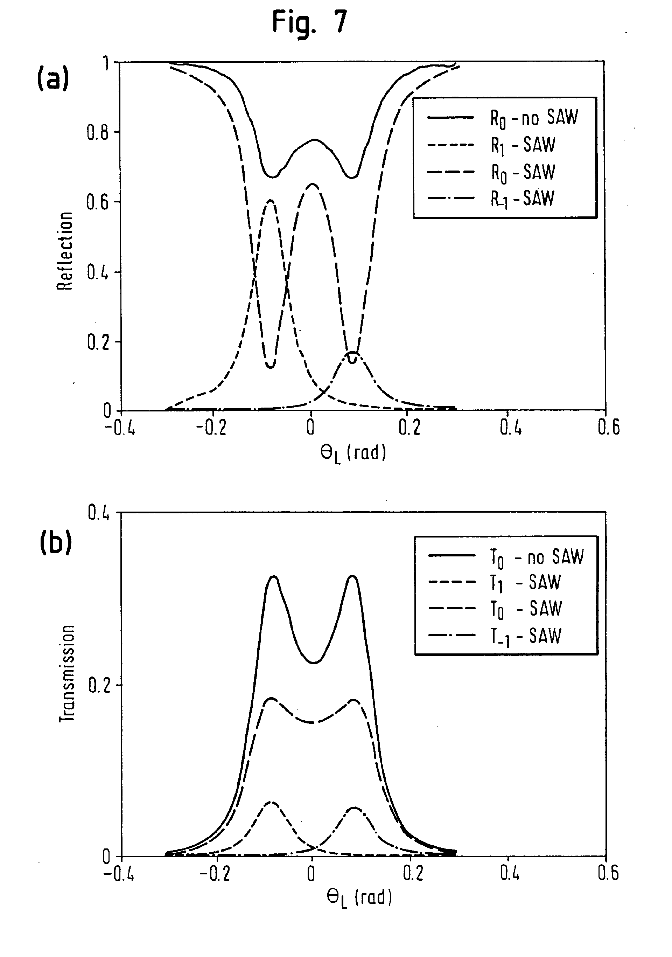

The operation of the optical cavity 28 in Fig. 6 under these conditions is illustrated in Figs. 7(a) and 7(b). The model device used for the computation comprises a top Bragg mirror bordering on air and consisting of ten alternating layers of GaAs and AlAs with thicknesses of 66.4 nm and 79 nm respectively, a quarter-wavelength GaAs cavity layer, and a bottom Bragg mirror consisting of twenty layers of AlAs and GaAs with thicknesses of 79 nm and 66.4 nm respectively, on a GaAs substrate. The light impinges from the air side of the top Bragg mirror. The azimuthal angle $\Phi_L$ is assumed to be zero and $\lambda_L$ = 940.6 nm. The linear power density of the surface acoustic wave is set to be 1340 W/m.

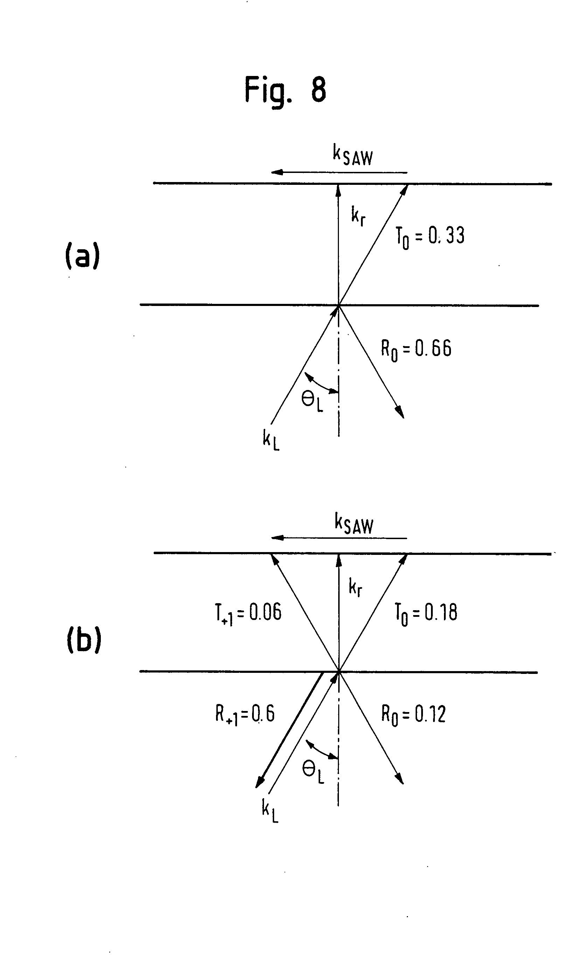

Fig. 7(a) shows the angular dependence of the transmission and Fig. 7(b) of the reflection. A maximum scattering is achieved at $\theta_L$ = 4.8°. In this case, the structure of Fig. 6 becomes a tunable optical switch. The switching characteristics are illustrated in Fig. 8, (a) in the presence and (b) in the absence of a surface acoustic wave. The non-collinear optical element can also be employed to switch the propagation direction of the light beam.

In order to take advantage of the acoustic modulation of the layer thicknesses, the acoustic wave 20 in Fig. 6 should induce strain components perpendicular to the surface 12 of the substrate 10. Since surface acoustic waves of the Rayleigh type have displacement vectors both in the propagation direction and in the direction perpendicular to the surface this requirement is automatically fulfilled.

The depth profile of the strain component $S_3 = \delta u_z/\delta z$ induced by a surface acoustic wave which is responsible for the modulation of the layer thicknesses in the structure of Fig. 6 is equal to the strain component shown in Fig. 4 (b) which has been calculated for the structure of Fig. 2. The changes of the layer thicknesses induced by the surface acoustic wave alter the resonance frequency and thus offer an additional choice for dynamic frequency filtering.

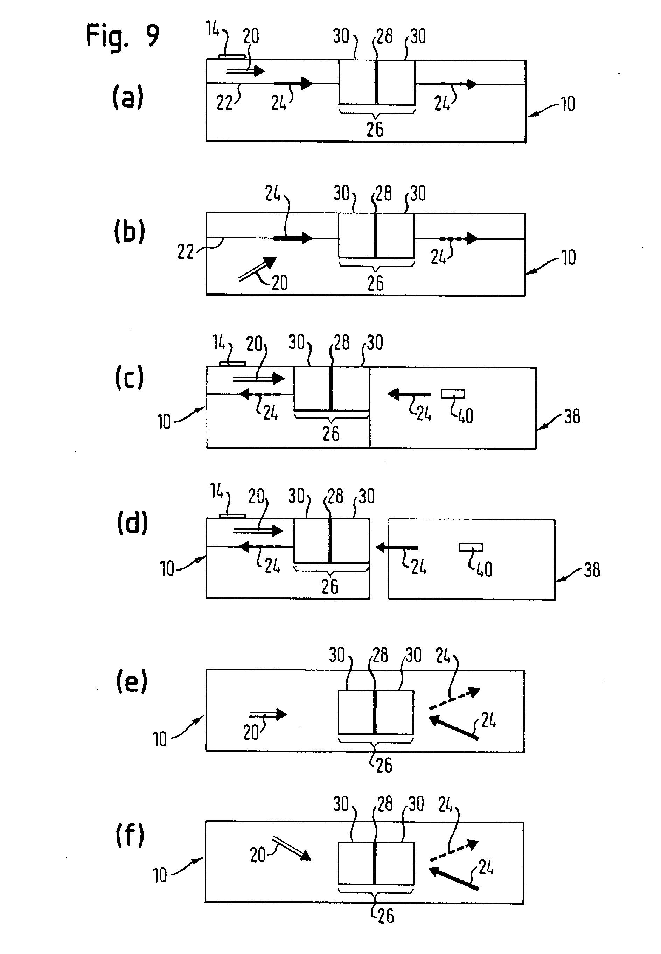

Fig. 9 shows various modifications of the first embodiment shown in Fig. 1. Corresponding features are denoted by corresponding reference numerals and the description previously given will be understood to apply to features designated with the same reference numerals unless something to the contrary is stated.

Fig. 9 (a) represents an optical device of the invention which operates in a transmission configuration. On either side of the active area 26, an optical wave guide 22 extends in a direction perpendicular to the Bragg mirrors 30 and the optical cavity 28. The direction of propagation of the acoustic wave 20 generated by the transducer 14 extends parallel to the optical wave guide 22 and, thus, perpendicular to the optical cavity 28. This type of structure therefore is an example of a "collinear cavity" device.

According to a particular embodiment, the optical wave guide 22 can serve as an acoustic wave guide at the same time. Depending on the switching state of the active region 26, the optical cavity 28 either transmits or reflects an optical wave 24 impinging from the left side on the active region 26. Thus, the device functions as an optical switch.

Fig. 9 (b) shows an embodiment similar to that in Fig. 9 (a). However, in the present structure, the direction of propagation of the acoustic wave 20 is parallel to the surface and oblique to that of the optical wave 24 and to the optical cavity 28. This type of structure therefore is an example of a "non-collinear cavity" device.

Fig. 9 (c) shows a layout in which a second substrate 38 adjoins the substrate 10 of an optical device of the invention. This second substrate 38 can comprise a light source 40, e.g. a light emitting diode or laser, emitting an optical wave 24 onto the optical device. The second substrate may also contain an optical wave guide (not shown). As shown in Fig. 9 (d), it is also possible for the second substrate 38 to be spaced apart from the optical device with, for instance, an air gap forming between the first and second substrates 10, 12. Depending on the switching state of the active region 26, the optical device either transmits or reflects the optical wave 24 emitted from said light source 40.

Figs. 9 (e) and (f) show an optical device of the invention in which the active region 26 is disposed in a core region of the substrate 10. The direction of propagation of the optical wave 24 is oblique to the Bragg mirrors 30 and the optical cavity 28. Such a structure can be employed as a tunable switch to vary the intensity and the direction of propagation of the optical wave following impingement on the active region 26. The direction of propagation of the acoustic wave 20 can be perpendicular (Fig. 9 (e)), oblique (Fig. 9 (f)), or parallel (not shown) to the Bragg mirrors 30 and the optical cavity 28.

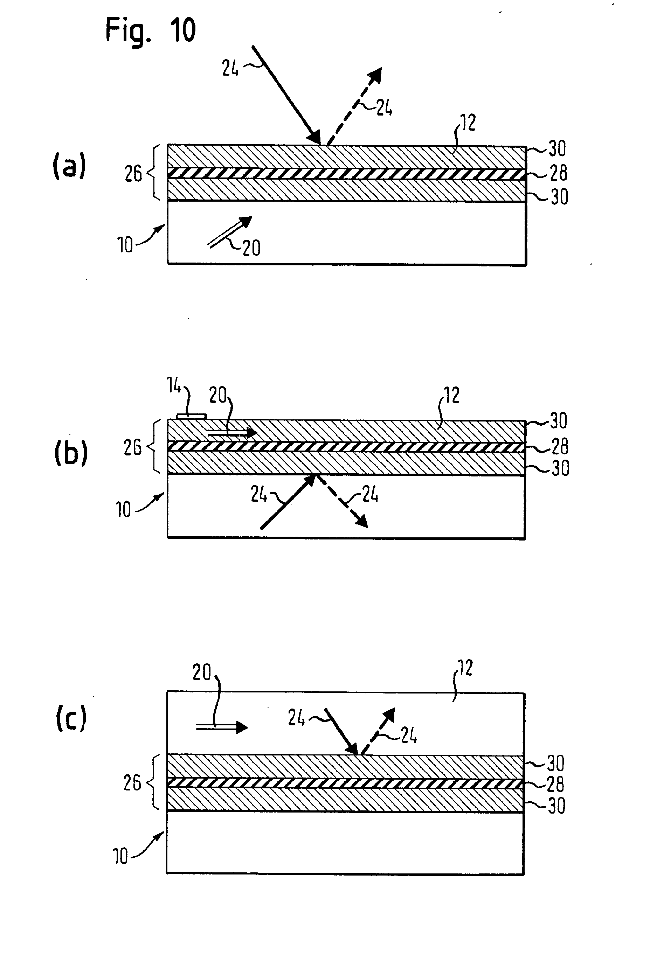

Figs. 10 (a) to (c) show modifications of the second embodiment of the controllable optical device of the present invention. The devices are similar to that shown in Fig. 6 (with the same reference numerals denoting corresponding features).

In the device shown in Fig. 10 (a), the active region 26 extends parallel to the surface 12 of the substrate 10. The optical wave 24 impinges from outside the substrate 10 on the said surface 12, with the direction of propagation of the optical wave 24 being oblique to the active region 26. At the same time, the direction of propagation of the acoustic wave 20 extends in a direction oblique to the Bragg mirrors 30 and the optical cavity layer 28.

Since the optical and the acoustic waves 24, 20 are not collinear, the embodiment shown in Fig 10 (a) therefore is a further example of a "non-collinear cavity" structure. The acoustic wave 20 will modulate the refractive index and produce a strain component perpendicular to the direction of propagation of the optical wave 24. Such a structure can be employed as a tunable switch to vary the intensity and the direction of propagation of the optical wave in the plane of the device.

Fig. 10 (b) shows a similar structure, with the direction of propagation of the acoustic wave 20 extending parallel to the active region 26 and the optical wave 24 impinging from within the substrate onto the active region 26. The angle of incidence may be oblique to the optical cavity 28, as shown in the figure, or perpendicular to the optical cavity 28 (not shown).

Fig. 10 (c) shows a further embodiment of the device of the invention, in which the active region 26 extends parallel to the surface 12 of the substrate 10 and is disposed in an inner region of the substrate 10. As in the previous embodiment, the optical wave 24 impinges onto the active region 26 from within the substrate 10, in the present case from above the active region 26, although it may equally well impinge from underneath the active region 26. The angle of incidence of the optical wave 24 may vary between 0° and 90°. The direction of propagation of the acoustic wave 20 is shown to be parallel to the Bragg mirrors 30 and the optical cavity 28 but can be also be perpendicular or oblique thereto.

**Claims**

1. A controllable optical device for integrated optics applications comprising

    a material structure,
    at least one optical cavity defined in said material structure and having a refractive index, a dimension, and first and second sides, said material structure including a plurality of alternating transparent layer regions of alternating refractive indices forming first and second Bragg mirrors disposed one at each of said first and second sides of said optical cavity, and
    at least one transducer provided on said material structure for the generation of acoustic waves adapted to modulate said refractive index and said dimension of said optical cavity whereby to influence a light beam incident on said Bragg mirrors and said optical cavity.

2. A controllable optical device in accordance with claim 1, wherein either said Bragg mirrors and said optical cavity extend perpendicular to a surface of said material structure, or said Bragg mirrors and said optical cavity extend parallel to a surface of said material structure.

3. A controllable optical device in accordance with claim 1 or 2, said optical cavity and said Bragg mirrors being implemented as photonic band gap lattice layers, e.g. a 1D-photonic structure, said photonic lattice optionally including at least one of etched holes and etched trenches in order to form said optical cavity and said Bragg mirrors, whereby a 2D photonic structure is formed.

4. A controllable optical device in accordance with any one of the preceding claims, said optical cavity being embedded in an acoustic resonator.

5. A controllable optical device in accordance with any one of the preceding claims, the direction of propagation of said acoustic wave either extending along a direction perpendicular to said Bragg mirrors and said optical cavity, or extending along a direction oblique to said Bragg mirrors and said optical cavity, or extending along a direction parallel to said Bragg mirrors and said optical cavity.

6. A controllable optical device in accordance with any one of the preceding claims, the direction of propagation of said optical wave either extending along a direction perpendicular to said Bragg mirrors and said optical cavity, or extending along a direction oblique to said Bragg mirrors and said optical cavity.

7. A controllable optical device in accordance with any one of the preceding claims, there being at least one optical wave guide defined in said material structure and either extending in a direction perpendicular to said Bragg mirrors and said optical cavity, or extending in a direction oblique to said Bragg mirrors and said optical cavity.

8. A controllable optical device in accordance with any one of the preceding claims, said material structure comprising one of a multilayer structure, a plurality of layers of single crystal structure, alternating layers of semiconductor materials such as AlAs, GaAs, and (AlGa)As layers, a plurality of layers of amorphous structure, and at least one amorphous layer and at least one further layer of single crystal material.

9. A controllable optical device in accordance with any one of the preceding claims, said material structure being piezoelectric, preferably being made from one of the materials of the group of piezoelectric insulators including $LiNbO_3$, ZnO, or being made from one of the materials of the group of piezoelectric semiconductors including (Al, Ga)As and (Al,Ga,In)N.

10. A controllable optical device in accordance with any one of claims 1 to 8, a piezoelectric layer or piezoelectric layers being disposed on said material structure and used to generate acoustic oscillations which propagate through said material structure.

11. A controllable optical device in accordance with any one of claims 1 to 8, said material structure being arranged on a piezoelectric substrate.

12. A controllable optical device in accordance with claim 1, said acoustic wave being a surface acoustic wave, or a bulk acoustic wave.

13. A controllable optical device in accordance with any one of the preceding claims, comprising an acoustic waveguide consisting of a ridge waveguide with lateral dimensions typically between 2 µm and 10 µm and a height of a few micrometers.

14. A controllable optical device in accordance with claim 7, comprising an acoustic wave guide which coincides with said optical wave guide.

15. A controllable optical device in accordance with any one of the preceding claims, said acoustic wave and said light beam propagating in different directions.

16. A controllable optical device in accordance with any one of the preceding claims, comprising focusing means for focusing the acoustic beam, said focusing means preferably including at least one of a focusing acoustic transducer and/or an acoustic waveguide of a tapered shape.

17. A controllable optical device in accordance with any one of the preceding claims, said acoustic transducer being an interdigital transducer, preferably an interdigital transducer consisting of interlaced metal fingers, especially an interdigital transducer having spaced apart interdigitated finger elements having graded spacings.

18. A controllable optical device in accordance with any one of the preceding claims, comprising focusing means for focusing the light beam and/or said optical wave having a wavelength typically in the range from 0.25 µm to 2 µm.

19. A method of switching a light beam, comprising the steps of
directing a light beam into an optical cavity sandwiched between first and second multilayer structures each forming a respective Bragg mirror and
directing an acoustic wave at said Bragg mirrors and said optical cavity to influence said light beam, for example to realize a switching or filtering function.

20. An optical device for integrated optics applications comprising
a material structure,
an acoustic transducer on said material structure for the generation of an acoustic wave, and
an active region defined in said material structure to be arranged in the path of an optical wave, said active region being adapted to permit said optical wave and said acoustic wave to interact to influence said optical wave, said active region optionally including a 2D photonic band gap lattice

21. An optical device in accordance with claim 20, said active region being structured either in a direction perpendicular to the direction of propagation of the optical wave or in a direction oblique to the direction of propagation of the optical wave.

22. An optical device in accordance with claim 20 or 21, said active region including an optical cavity sandwiched between first and second multilayer structures each forming a respective Bragg mirror.

23. An optical device in accordance with any one of claims 20 to 22, the direction of propagation of said acoustic wave extending either along a direction parallel to said active region, or along a direction perpendicular to said active region, or along a direction oblique to said active region.

24. An optical device in accordance with any one of claims 20 to 23, said acoustic wave being one of a surface acoustic wave or a bulk acoustic wave.

25. An optical device in accordance with any one of claims 20 to 24, said optical device being a controllable switch, optionally a wavelength selective switch, or a controllable filter, optionally a wavelength selective filter.

# Fig. 1

# Fig. 2

# Fig. 3

**(a)**

**(b)**

# Fig. 4

(a)

(b)

EP 1 336 892 A1

Fig. 5

(a)

(b)

Fig. 6

# Fig. 7

(a) Reflection vs $\Theta_L$ (rad)

Legend:
- $R_0$ – no SAW
- $R_1$ – SAW
- $R_0$ – SAW
- $R_{-1}$ – SAW

(b) Transmission vs $\Theta_L$ (rad)

Legend:
- $T_0$ – no SAW
- $T_1$ – SAW
- $T_0$ – SAW
- $T_{-1}$ – SAW

# Fig. 8

**Fig. 9**

(a)

(b)

(c)

(d)

(e)

(f)

# Fig. 10

(a)

(b)

(c)

**European Patent Office**

# EUROPEAN SEARCH REPORT

Application Number

EP 02 00 3599

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 130 843 A (HE JIANJUN ET AL) 14 July 1992 (1992-07-14) | 1,2, 4-12,15, 17-25 | G02F1/125 G02F1/11 G02F1/21 |
| Y | * the whole document * | 3 | |
| Y | US 2001/026659 A1 (HATANO TAKUJI ET AL) 4 October 2001 (2001-10-04) | 3 | |
| A | * page 4, line 0061 – line 0064 * <br> * page 6, line 0084 * <br> * page 6, line 0092 * <br> * page 7, line 0096; figures 7,16,18 * | 20 | |
| A | US 5 502 782 A (SMITH RONALD H) 26 March 1996 (1996-03-26) * abstract * * column 10, line 13 – line 34 * * column 11, line 35 – line 42; figures 1,3 * | 1,2,16, 20,21 | |
| D,A | LIU W F ET AL: "ACOUSTO-OPTIC SUPERLATTICE MODULATOR USING A FIBER BRAGG GRATING" OPTICS LETTERS, OPTICAL SOCIETY OF AMERICA, WASHINGTON, US, vol. 22, no. 19, 1 October 1997 (1997-10-01), pages 1515-1517, XP000723632 ISSN: 0146-9592 * page 1516, right-hand column; figures 2,3 * | 1-4,6, 13,14, 16,25 | **TECHNICAL FIELDS SEARCHED** (Int.Cl.7) <br><br> G02F |

The present search report has been drawn up for all claims

| Place of search | Date of completion of the search | Examiner |
|---|---|---|
| THE HAGUE | 9 July 2002 | Stang, I |

EPO FORM 1503 03 82 (P04C01)

**ANNEX TO THE EUROPEAN SEARCH REPORT
ON EUROPEAN PATENT APPLICATION NO.**                    EP 02 00 3599

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2002

| Patent document cited in search report | | Publication date | Patent family member(s) | | Publication date |
|---|---|---|---|---|---|
| US 5130843 | A | 14-07-1992 | FR | 2648576 A1 | 21-12-1990 |
| | | | DE | 69007864 D1 | 11-05-1994 |
| | | | DE | 69007864 T2 | 11-08-1994 |
| | | | EP | 0403389 A1 | 19-12-1990 |
| | | | JP | 3116028 A | 17-05-1991 |
| US 2001026659 | A1 | 04-10-2001 | JP | 2001281714 A | 10-10-2001 |
| US 5502782 | A | 26-03-1996 | CA | 2166742 A1 | 10-07-1996 |
| | | | US | 5682445 A | 28-10-1997 |
| | | | US | 5719971 A | 17-02-1998 |

EPO FORM P0459

For more details about this annex : see Official Journal of the European Patent Office, No. 12/82